# EUROPÄISCHE PATENTSCHRIFT

(11) **EP 2 121 390 B1**
(45) Veröffentlichungstag und Bekanntmachung des Hinweises auf die Patenterteilung: **22.12.2010**
(21) Anmeldenummer: 08701684.6
(22) Anmeldetag: 06.02.2008
(51) Int. Cl.: B60R 21/215

(54) **FOLIENPLAKETTE FÜR EINE AIRBAGABDECKUNG**
FILM PLATE FOR AN AIRBAG COVER
PLAQUETTE EN PELLICULE POUR UNE GARNITURE D'AIRBAG

(30) Priorität: 05.03.2007 DE 102007011109
(43) Veröffentlichungstag der Anmeldung: 25.11.2009
(73) Patentinhaber: Takata-Petri AG, 63743 Aschaffenburg (DE)
(72) Erfinder: WEIGAND, Steffen, 63739 Aschaffenburg (DE); SAUER, Frank, 63843 Niedernberg (DE)
(74) Vertreter: Baumgärtel, Gunnar
(86) Internationale Anmeldenummer: PCT/EP2008/051444
(87) Internationale Veröffentlichungsnummer: WO 2008/107255

(56) Entgegenhaltungen:
- DE-A1- 19 749 173
- DE-A1-102004 046 866
- JP-A- 2001 151 063
- US-A- 6 003 895
- US-A- 6 158 764
- US-A1- 2006 202 449
- US-B1- 6 209 905
- US-B1- 6 546 659

## Beschreibung

Die Erfindung betrifft eine Folienplakette für eine Airbagabdeckung.

Eine Folienplakatte gemäß dem Oberbegriff des Anspruchs 1 ist aus US 2006/0202449 bekannt.

Neben Airbagabdeckungen mit massiven Plaketten als Dekorelemente sind Airbagabdeckungen bekannt geworden, die Plaketten aus Folie verwenden. Diese Folienplaketten weisen den Vorteil auf, dass im Crashfall beim Aufreißen der Airbagabdeckung eine Verletzung durch die weiche Folienplakette ausgeschlossen ist.

Aus der DE 101 00 747 A1 ist eine Airbagabdeckung mit einer flexiblen dekorativen Plakette bekannt. Diese weist einen vergleichsweise weichen Kunststoffvorformling, der zu der Airbagabdeckung kompatibel ist, sowie eine Kunststoffgrundschicht und eine Folienoberschicht auf. Diese werden in einem mehrere Schritte umfassenden Verfahren mittels einer Warmpresse miteinander verbunden. Der Nachteil dieser Anordnung besteht darin, dass diese Plakette aus mehreren Schichten besteht, die in mehreren Schritten zusammengefügt und auf der Airbagabdeckung befestigt werden müssen.

Weiterhin ist aus der US 7 059 628 B2 eine Airbagabdeckung bekannt, bei der eine kompakte Plakette, die z.B. aus Metall besteht, mittels einer Rastverbindung auf der Airbagabdeckung befestigt wird. Eine solche kompakte Plakette kann zwar im Vergleich zur vorgenannten Folienplakette einfacher hergestellt werden und sie lässt sich auch in einfacher Weise auf der Airbagabdeckung befestigen. Der Nachteil besteht aber in der Verletzungsgefahr eines Insassen im Crashfall.

Der Erfindung liegt die Aufgabe zugrunde, eine Folienplakette einfacher herzustellen und einfacher an der Airbagabdeckung zu befestigen.

Erfindungsgemäß wird das gemäß den Merkmalen des Anspruchs 1 erreicht.

Als Folienplakette für eine Airbagabdeckung ist erfindungsgemäß eine Folienplakette vorgesehen, die ohne Verstärkungselemente direkt auf der Airbagabdeckung befestigt ist, die am Ort der Folienplakette zumindest eine partielle Abstützung für die Folienplakette aufweist. Dadurch wird das Gewicht der Folienplakette gegenüber bekannten Folienplaketten verringert. Gegenüber einer Anordnung mit einer kompakten Plakette wird auch das Gewicht der Airbagabdeckung verringert, da die oftmals aufwändige Abstützung einer schweren Plakette entfällt. Im Vergleich zu Blech- oder zu gespritzten Kunststoffplaketten werden die Herstellungskosten minimiert. Das geringe Gewicht der Folienplakette reduziert die Belastungen auf die Airbagkappen und Anbindungsbereiche während der Auslösung des Airbags. Die Belastungen auf den Insassen im OOP-Fall werden reduziert.

Vorzugsweise weist die Airbagabdeckung am Ort der Folienplakette die Kontur der Folienplakette auf. Die Folienplakette kann z.B. tiefgezogen oder heiß oder kalt geprägt sein.

Die Folienplakette kann auf unterschiedliche Weise auf der Airbagabdeckung befestigt sein. So ist es möglich, die Folienplakette auf der Airbagabdeckung mittels mechanischer Verbindungselemente zu befestigen.

In einer ersten Ausführungsform ist vorgesehen, dass die Folienplakette auf der Airbagabdeckung mittels einer Rastverbindung befestigbar ist. Rastelelemente sind mindestens am äußeren Rand der Folienplakette vorgesehen. Als Rastelemente können elastisch verformbare Hakenelemente vorgesehen sein, die unter die Airbagabdeckung greifen. In einer bevorzugten Ausführungsform weisen die Hakenelemente mindestens zwei in entgegengesetzte Richtung weisende Haken auf.

Als Rastelemente können auch Laschen vorgesehen sein, denen an der Airbagabdeckung Rastnasen zugeordnet sind.

In einer zweiten Ausführungsform ist vorgesehen, dass die Folienplakette auf der Airbagabdeckung mittels einer Klemmverbindung befestigbar ist. Als Klemmelemente können elastisch verformbare tannenbaumartige Elemente vorgesehen sein, die in entsprechende Durchbrüche der Airbagabdeckung eingreifen.

In einer weiteren Ausgestaltung ist vorgesehen, dass freistehende Ränder der Folienplakette oder an diesen vorgesehene Laschen in zugeordnete Schlitze der Airbagabdeckung eingreifen.

Die mechanischen Verbindungselemente sind vorzugsweise einstückig an der Folienplakette vorgesehen.

Bei einer weiteren Ausführungsform ist die Folienplakette auf der Airbagabdeckung aufgeklebt.

Die Folienplakette weist vorzugsweise ein Dekorelement auf. Dieses kann mittels unterschiedlicher Technologien hergestellt sein. So kann die Folienplakette auf ihrer Oberfläche einen Farbdruck aufweisen. Die Folienplakette kann auch aus Dekorfolie hergestellt sein oder es kann ein galvanisch erzeugtes Dekorelement vorgesehen sein. Diese Herstellungstechnologien sind nur als Beispiel angegeben. Andere Herstellungstechnologien sind möglich.

Die Erfindung soll in Ausführungsbeispielen anhand von Zeichnungen erläutert werden. Es zeigen:
- Fig. 1: eine Airbagabdeckkappe mit Folienplakette;
- Fig. 2: eine Draufsicht auf einen Ausschnitt einer Airbagabdeckkappe mit Folienplakette;
- Fig. 3: einen Schnitt durch die Fig. 2 mit einer ersten Ausführungsform der Folienplakette;
- Fig. 4: eine vergrößerte Einzelheit der Fig. 3;
- Fig. 5: eine perspektivische Ansicht der Unterseite einer Folienplakette in einer zweiten Ausführungsform;
- Fig. 6: eine Draufsicht auf einen Ausschnitt einer Airbagabdeckkappe mit Folienplakette nach Fig. 5;
- Fig. 7: einen Schnitt durch die Fig. 6;
- Fig. 8: einen Schnitt durch die Fig. 7 in vergrößertem Maßstab;
- Fig. 9: eine perspektivische Ansicht der Unterseite einer Folienplakette in einer dritten Ausführungsform;
- Fig. 10: eine Draufsicht auf eine Airbagabdeckkappe mit Folienplakette nach Fig. 9;
- Fig. 11: einen Schnitt durch die Fig. 10;
- Fig. 12: einen Schnitt durch die Fig.11 in vergrößertem Maßstab;
- Fig. 13: eine perspektivische Ansicht der Unterseite einer Folienplakette in einer vierten Ausführungsform;
- Fig. 14: einen Draufsicht auf eine Airbagabdeckkappe mit Folienplakette nach Fig. 13;
- Fig. 15: einen Schnitt durch die Fig. 14 in vergrößertem Maßstab.

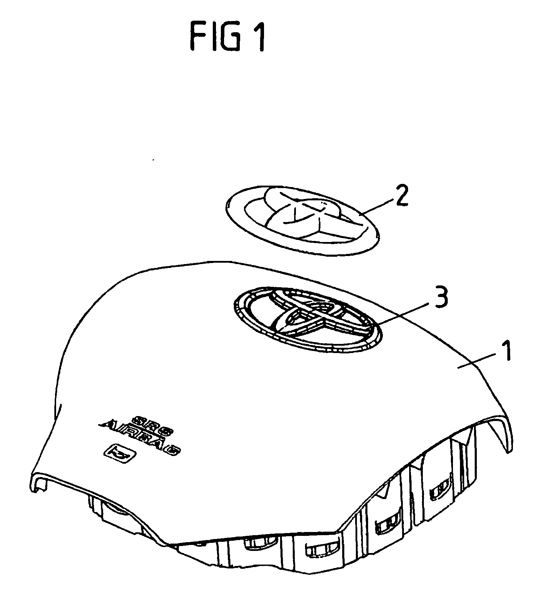

In der Fig. 1 ist eine Airbagabdeckkappe 1 in einer perspektivischen Ansicht dargestellt, der eine Folienplakette 2 zugeordnet ist. Die Airbagabdeckkappe 1 weist am Ort, an dem die Folienplakette vorgesehen ist, die erhabene Kontur 3 der Folienplakette auf, so dass diese komplett auf der Airbagabdeckkappe aufliegt. Deshalb sind keine Verstärkungen für die an sich labile Folienplakette erforderlich. Diese wären auch nicht erforderlich, wenn nur einzelne Abstützungen für die Folienplakette auf der Airbagabdeckkappe vorgesehen sind.

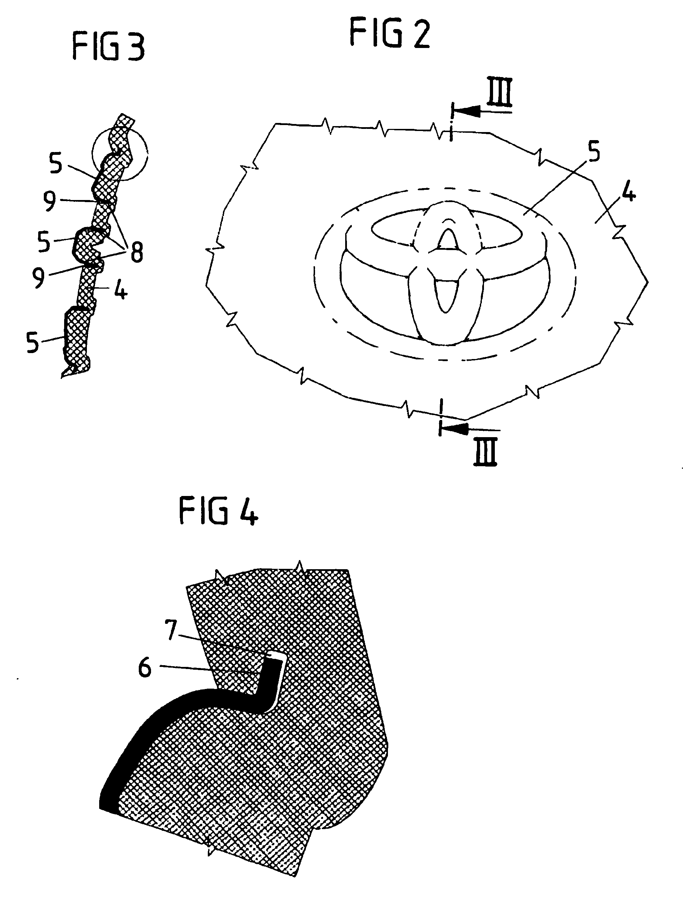

Die Fig. 2 zeigt einen Ausschnitt einer Airbagabdeckkappe 4 mit einer Folienplakette 5 in einer ersten Ausführungsform, die im Schnitt der Fig. 3 erkennbar ist. Die Folienplakette 5 weist einen umlaufenden Rand 6 auf, der nach außen abgewinkelt ist und in einen ebenfalls umlaufenden Schlitz 7 der Airbagabdeckkappe 4 eingreift, wie es insbesondere aus der Fig. 4 erkennbar ist. Innenränder 8 der Folienplakette 5 greifen ebenfalls in Schlitze 9 der Airbagabdeckkappe 4 ein. Die Folienplakette wird in dieser Ausführungsform durch Kleben auf der Airbagabdeckkappe befestigt.

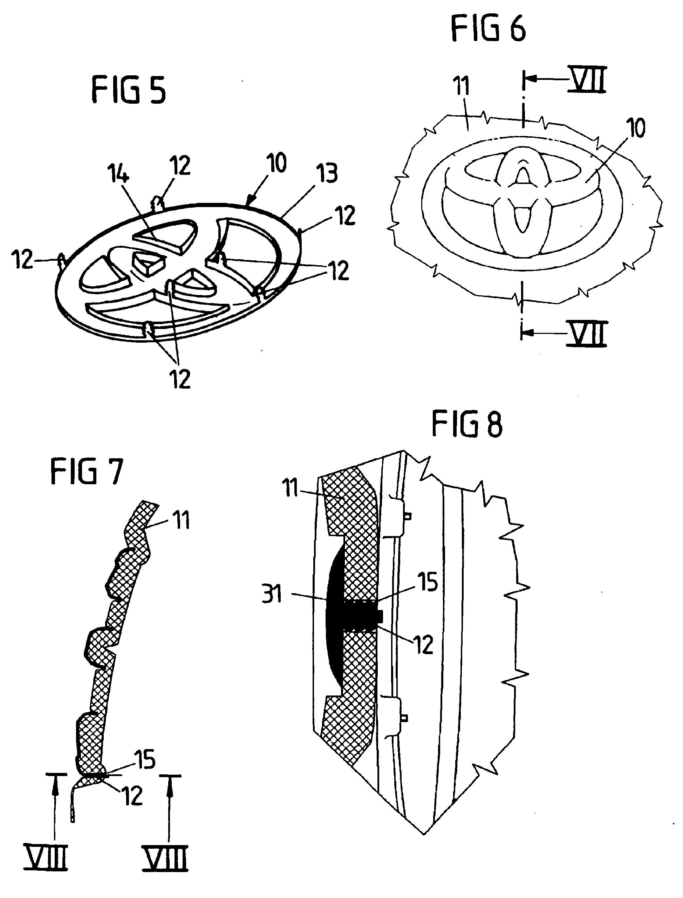

Bei der in der Fig. 5 dargestellten zweiten Ausführungsform einer Folienplakette 10 sind zu deren Befestigung auf einer Airbagabdeckkappe 11 tannenbaumartige Elemente 12 als Klemmelemente vorgesehen. Diese sind sowohl am umlaufenden Außenrand 13 als auch an Innenrändern 14 der Folienplakette 10 vorgesehen und einstückig mit dieser ausgebildet. Die Elemente 12 greifen in Schlitze 15 der Airbagabdeckkappe 11 ein, wie es aus den Figuren 7 und 8 ersichtlich ist. Aus der Fig. 8 ist erkennbar, dass die Elemente 12 mit ihren zackenartigen Abschnitten an gegenüberliegenden Seiten der Schlitze 15 anliegen. Die Elemente 12 sind breiter als die Schlitze 15 und werden beim Einführen in die Schlitze 15 elastisch verformt. Nach dem Eindrücken der Elemente 12 in die Schlitze 15 liegt eine Klemmverbindung vor.

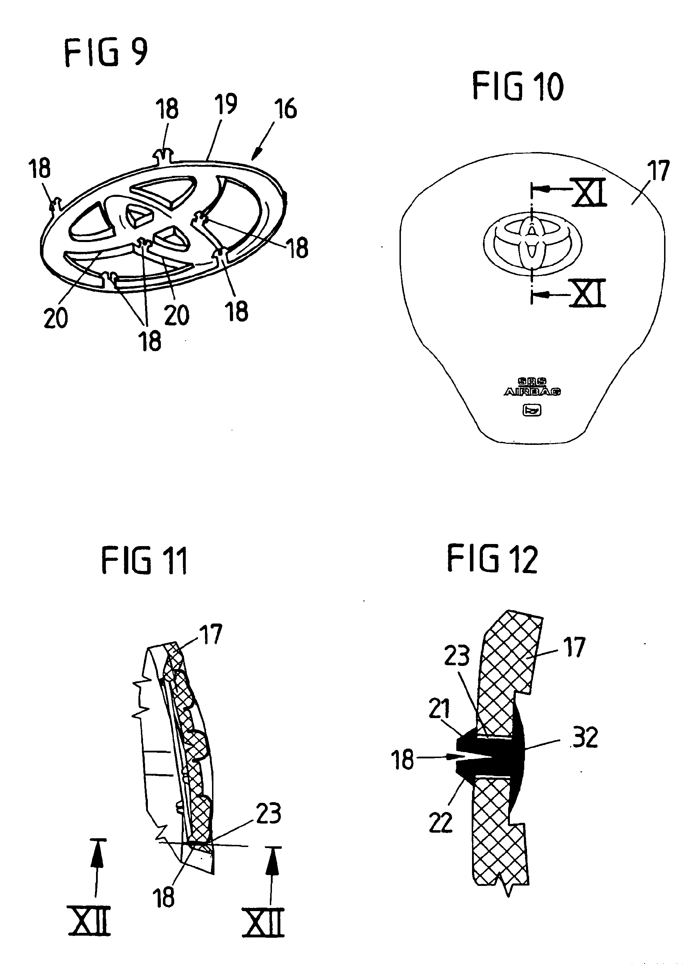

Bei der in der Fig. 9 dargestellten dritten Ausführungsform einer Folienplakette 16 sind zu deren Befestigung auf einer Airbagabdeckkappe 17 Hakenelemente 18 vorgesehen. Diese sind sowohl am umlaufenden Außenrand 19 als auch an Innenrändern 20 der Folienplakette 16 vorgesehen und einstückig mit dieser ausgebildet. Die Hakenelemente 18 weisen zwei in entgegengesetzte Richtung weisende Haken 21, 22 auf (Fig.12). Diese greifen in Schlitze 23 ein, wie es aus den Figuren 11 und 12 erkennbar ist. Bei der Montage der Folienplakette 16 werden die Haken 21, 22 durch das Aufdrücken auf die Airbagabdeckkappe 17 elastisch verformt, so dass sie sich durch die Schlitze 23 drücken lassen. Nach dem Passieren der Schlitze federn die Haken 21, 22 wieder nach außen und greifen unter die Airbagabdeckkappe 17, wodurch die Folienplakette 16 auf dieser befestigt ist.

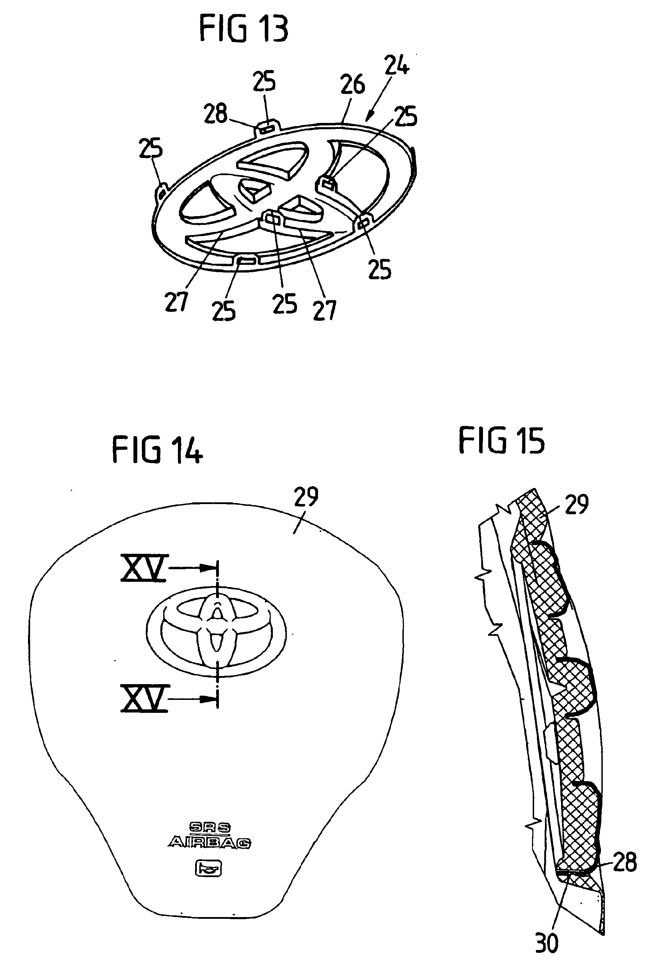

In der Fig. 13 ist die vierte Ausführungsform einer Folienplakette 24 dargestellt. Diese weist Laschen 25 auf, die sowohl am umlaufenden Außenrand 26 als auch an Innenrändern 27 vorgesehen sind und einstückig mit der Folienplakette 24 ausgebildet sind. Die Laschen 25 weisen Durchbrüche 28 auf, denen an einer Airbagabdeckkappe 29 elastisch verformbare Rastnasen 31 zugeordnet sind. Bei der Montage der Folienplakette 24 werden die Rastnasen 31 durch das Niederdrücken der Laschen 25 elastisch verformt. Sie rasten schließlich in die Durchbrüche 28 ein, wodurch die Folienplakette auf der Airbagabdeckkappe befestigt ist.

In den Figuren 8 und 12 sind Abschnitte der Folienplakette durch die Bezugsziffern 31 und 32 gekennzeichnet.

## Patentansprüche

1. Folienplakette für eine Airbagabdeckung, wobei
eine durch Tiefziehen oder Prägung vorgeformte Folienplakette (2, 5, 10, 16, 24) vorgesehen ist, die ohne Verstärkungselemente direkt auf der Airbagabdeckung (1, 4, 11, 17, 29) mittels mechanischer Verbindungselemente (12, 18, 25) befestigbar ist, wobei die Airbagabdeckung (1, 4, 11, 17,29) am Ort der Folienplakette (2, 5, 10 16, 24) zumindest eine partielle Abstützung (3) für die Folienplakette (2, 5, 10, 16, 24) ausweist und **dadurch gekennzeichnet, dass** die Folienplakette auf ihrer Unterseite eine eingeprägte Struktur aufweist, die auf der Oberseite sichtbar ist.

2. Folienplakette nach Anspruch 1, **dadurch gekennzeichnet, dass** die Folienplakette (2, 5, 10, 16, 24) und die Airbagabdeckung am Ort der Folienplakette die gleiche Kontur (3) aufweisen.

3. Folienplakette nach Anspruch 1 oder 2, **dadurch gekennzeichnet, dass** diese heiß oder kalt geprägt ist.

4. Folienplakette nach mindestens einem der vorhergehenden Ansprüche, **dadurch gekennzeichnet, dass** die Folienplakette (16, 24) auf der Airbagabdeckung (17, 29) mittels einer Rastverbindung (18, 23, 28, 30) befestigbar ist.

5. Folienplakette nach Anspruch 4, **dadurch gekennzeichnet, dass** Rastelemente (18, 25) mindestens am äußeren Rand (19, 26) der Folienplakette (16, 24) vorgesehen sind.

6. Folienplakette nach Anspruch 4 oder 5, **dadurch gekennzeichnet, dass** als Rastelemente elastisch verformbare Hakenelemente (18) vorgesehen sind, die unter die Airbagabdeckung (17) greifen.

7. Folienplakette nach Anspruch 6, **dadurch gekennzeichnet, dass** die Hakenelemente (18) mindestens zwei in entgegengesetzte Richtung weisende Haken (21, 22) aufweisen.

8. Folienplakette nach Anspruch 4 oder 5, **dadurch gekennzeichnet, dass** als Rastelemente Laschen (25) vorgesehen sind, denen an der Airbagabdeckung (29) Rastnasen (30) zugeordnet sind.

9. Folienplakette nach mindestens einem der Ansprüche 1 bis 3, **dadurch gekennzeichnet, dass** die Folienplakette (10) auf der Airbagabdeckung (11) mittels einer Klemmverbindung (12, 15) befestigbar ist.

10. Folienplakette nach Anspruch 9, **dadurch gekennzeichnet, dass** als Klemmelemente elastisch verformbare tannenbaumartige Elemente (12) vorgesehen sind, die in entsprechende Durchbrüche (15) der Airbagabdeckung (11) eingreifen können.

11. Folienplakette nach mindestens einem der vorhergehenden Ansprüche, **dadurch gekennzeichnet, dass** freistehende Ränder (6, 8, 13, 14, 19, 20, 26, 27) der Folienplakette (5, 10, 16, 24) oder an diesen vorgesehene Laschen (25) in zugeordnete Schlitze (7, 15, 28) der Airbagabdeckung (4, 11, 17, 29) eingreifen.

12. Folienplakette nach mindestens einem der vorhergehenden Ansprüche, **dadurch gekennzeichnet, dass** die mechanischen Verbindungselemente (12, 18, 25) einstückig an der Folienplakette (10, 16, 24) vorgesehen sind.

13. Folienplakette für eine Airbagabdeckung,
**dadurch gekennzeichnet, dass** eine durch Tiefziehen oder Prägung vorgeformte Folienplakette (2, 5, 10, 16, 24) vorgesehen ist, die ohne Verstärkungselemente direkt auf der Airbagabdeckung (1, 4, 11, 17, 29) aufklebbar ist, wobei die Airbagabdeckung (1, 4, 11, 17,29) am Ort der Folienplakette (2, 5, 10 16, 24) zumindest eine partielle Abstützung (3) für die Folienplakette (2, 5, 10, 16, 24) aufweist.

14. Folienplakette nach mindestens einem der vorhergehenden Ansprüche, **dadurch gekennzeichnet, dass** die Folienplakette ein Dekorelement aufweist.

15. Folienplakette nach Anspruch 14, **dadurch gekennzeichnet, dass** die Folienplakette auf ihrer Oberfläche einen Farbdruck aufweist.

## Claims

1. Film plate for an airbag cover, wherein
a film plate (2, 5, 10, 16, 24) pre-formed by deep-drawing or embossing is provided, which is directly without reinforcing elements attachable to the airbag cover (1, 4, 11, 17, 29) by mechanical connecting elements (12, 18, 25), wherein the airbag cover (1, 4, 11, 17, 29) has at the location of the film plate (2, 5, 10, 16, 24) at least a partial support (3) for the film plate (2, 5, 10, 16, 24) and
**characterized in that**
the film plate has an embossed structure on its lower side, which is visible on the upper side.

2. Film plate according to claim 1, **characterized in that** the film plate (2, 5, 10, 16, 24) and the airbag cover have at the location of said film plate (2, 5, 10, 16, 24) the same contour (3).

3. Film plate according to claim 1 or 2, **characterized in that** this is embossed hot or cold.

4. Film plate according to one of the preceding claims, **characterized in that** the film plate (16, 24) is attachable by a snap-in connection (18, 23, 28, 30) on the airbag cover (17, 29).

5. Film plate according to claim 4, **characterized in that** the snap-in elements (18, 25) are provided at least at the outer rim (19, 26) of the film plate (16, 24).

6. Film plate according to claim 4 or 5, **characterized in that** elastically deformable hook elements (18) are provided as snap-in elements, which reach beneath the airbag cover (17).

7. Film plate according to claim 6, **characterized in that** the hook elements (18) have at least two hooks (21, 22) pointing in the opposite direction.

8. Film plate according to claim 4 or 5, **characterized in that** plates (25) are provided as snap-in elements, to which snap-in noses (30) on the airbag cover (29) are assigned.

9. Film plate according to one of claims 1 to 3, **characterized in that** the film plate (10) is attachable to the airbag cover (11) by a clamping connection (12, 15).

10. Film plate according to claim 9, **characterized in that** elastically deformable fir tree-like elements (12) are provided as clamping elements, which can reach into corresponding openings (15) of the airbag cover (11).

11. Film plate according to one of the preceding claims, **characterized in that** self-supporting rims (6, 8, 13, 14, 19, 20, 26, 27) of the film plate (5, 10, 16, 24) or plates (25) provided at these reach into corresponding slots (7, 15, 28) of the airbag cover (4, 11, 17, 29).

12. Film plate according to one of the preceding claims, **characterized in that** the mechanical connecting elements (12, 18, 25) are provided in one piece at the film plate (10, 16, 24).

13. Film plate for an airbag cover, **characterized in that** a film plate (2, 5, 10, 16, 24) pre-formed by deep-drawing or embossing is provided, which can be adhered directly to the airbag cover (1, 4, 11, 17, 29) without reinforcing elements, whereby the airbag cover (1, 4, 11, 17, 29) has at the location of the film plate (2, 5, 10, 16, 24) at least a partial support (3) for the film plate (2, 5, 10, 16, 24).

14. Film plate according to one of the preceding claims, **characterized in that** the film plate has a decorative element.

15. Film plate according to claim 14, **characterized in that** the film plate has a colour print on its surface.

## Revendications

1. Plaquette en pellicule pour un couvercle d'airbag, dans laquelle il est prévu une plaquette en pellicule (2, 5, 10, 16, 24) préformée par emboutissage ou estampage qui peut être fixée sans éléments de renforcement directement sur le couvercle d'airbag (1, 4, 11, 17, 29) au moyen d'éléments de liaison mécaniques (12, 18, 25), le couvercle d'airbag (1, 4, 11, 17, 29) présentant à l'endroit de la plaquette en pellicule (2, 5, 10, 16, 24) au moins un support partiel (3) pour la plaquette en pellicule (2, 5, 10, 16, 24) et **caractérisée en ce que** la plaquette en pellicule présente sur sa face inférieure une structure estampée qui est visible sur la face supérieure.

2. Plaquette en pellicule selon la revendication 1, **caractérisée en ce que** la plaquette en pellicule (2, 5, 10, 16, 24) et le couvercle d'airbag présentent à l'endroit de la plaquette en pellicule le même contour (3).

3. Plaquette en pellicule selon la revendication 1 ou 2, **caractérisée en ce que** celle-ci est estampée à chaud ou à froid.

4. Plaquette en pellicule selon au moins l'une quelconque des revendications précédentes, **caractérisée en ce que** la plaquette en pellicule (16, 24) peut être fixée sur le couvercle d'airbag (17, 29) au moyen d'un assemblage encliquetable (18, 23, 28, 30).

5. Plaquette en pellicule selon la revendication 4, **caractérisée en ce que** des éléments d'arrêt (18, 25) sont prévus au moins sur le bord extérieur (19, 26) de la plaquette en pellicule (16, 24).

6. Plaquette en pellicule selon la revendication 4 ou 5, **caractérisée en ce que** sont prévus comme éléments d'arrêt, des éléments en forme de crochet (18) élastiquement déformables qui prennent sous la garniture d'airbag (17).

7. Plaquette en pellicule selon la revendication 6, **caractérisée en ce que** les éléments en forme de crochet (18) présentent au moins deux crochets (21, 22) dirigés dans des directions opposées.

8. Plaquette en pellicule selon la revendication 4 ou 5, **caractérisée en ce que** sont prévus comme éléments d'arrêt, des pattes (25) auxquelles sont affectés des becs d'encliquetage (30) au niveau du couvercle d'airbag (29).

9. Plaquette en pellicule selon au moins l'une quelconque des revendications 1 à 3, **caractérisée en ce que** la plaquette en pellicule (10) peut être fixée sur le couvercle d'airbag (11) au moyen d'une liaison par serrage (12, 15).

10. Plaquette en pellicule selon la revendication 9, **caractérisée en ce que** sont prévus comme éléments de serrage, des éléments (12) en forme de sapin élastiquement déformables qui peuvent s'engager dans des passages (15) correspondants du couvercle d'airbag (11).

11. Plaquette en pellicule selon au moins l'une quelconque des revendications précédentes, **caractérisée en ce que** des bords libres (6, 8, 13, 14, 19, 20, 26, 27) de la plaquette en pellicule (5, 10, 16, 24) ou des pattes (25) prévues au niveau de ceux-ci s'engagent dans des fentes associées (7, 15, 28) du couvercle d'airbag (4, 11, 17, 29).

12. Plaquette en pellicule selon au moins l'une quelconque des revendications précédentes, **caractérisée en ce que** les éléments de liaison mécanique (12, 18, 25) sont prévus d'un seul tenant au niveau de la plaquette en pellicule (10, 16, 24).

13. Plaquette en pellicule pour un couvercle d'airbag,
**caractérisée en ce qu'**il est prévu une plaquette en pellicule (2, 5, 10, 16, 24) préformée par emboutissage ou estampage, qui peut être collée sans éléments de renforcement directement sur le couvercle d'airbag (1, 4, 11, 17, 29), le couvercle d'airbag (1, 4, 11, 17, 29) présentant à l'endroit de la plaquette en pellicule (2, 5, 10, 16, 24) au moins un support partiel (3) pour la plaquette en pellicule (2, 5, 10, 16, 24).

14. Plaquette en pellicule selon au moins l'une quelconque des revendications précédentes, **caractérisée en que** la plaquette en pellicule présente un élément de décor.

15. Plaquette en pellicule selon la revendication 14, **caractérisée en ce que** la plaquette en pellicule présente sur sa surface une impression en couleur.
